# EUROPEAN PATENT APPLICATION

(11) **EP 4 843 972 A1**
(43) Date of publication of application: **25.11.2026**
(21) Application number: 24918659.4
(22) Date of filing: 11.11.2024
(51) Int. Cl.: C04B 41/89, C04B 41/87, F01D 5/28, F01D 9/02, F01D 25/00, F02C 7/00

(54) **SAND AND DUST RESISTANT FILM**

(30) Priority: 19.01.2024 JP 2024006581
(71) Applicant: IHI Corporation, Tokyo 135-8710 (JP)
(72) Inventor: NAKAMURA, Takeshi, Tokyo 135-8710 (JP); YAMAZAKI, Naoki, Tokyo 135-8710 (JP); SUZUKI, Masaya, Tokyo 135-8710 (JP); DOI, Kohei, Tokyo 135-8710 (JP); KITAOKA, Satoshi, Nagoya-shi, Aichi 456-8587 (JP); TANAKA, Makoto, Nagoya-shi, Aichi 456-8587 (JP); HASHIMOTO, Soma, Nagoya-shi, Aichi 456-8587 (JP); ITO, Taishi, Nagoya-shi, Aichi 456-8587 (JP); KATO, Takeharu, Nagoya-shi, Aichi 456-8587 (JP)
(74) Representative: MERH-IP Matias Erny Reichl Hoffmann Patentanwälte PartG mbB
(86) International application number: PCT/JP2024/040002
(87) International publication number: WO 2025/154372

(57) **Abstract**

A coating for protecting a ceramic-matrix composite against a high-temperature environment including dust is provided with a top layer of a substance represented by a formula a (ReO_{1.5})b(AlO_{1.5})c(TrO₂) as an average composition at least on a face exposed to the environment, wherein Re is one or more selected from Yb and Lu, and Tr is Hf or Zr, wherein aluminum in the substance constitutes grains formed of a compound represented by Re₃Al₅O₁₂ and the grains with common crystal orientations aggregate together to respectively form multiple domains.

## Description

### TECHNICAL FIELD

The present disclosure relates to a coating that protects a subject body against a high-temperature environment, and in particular relates to a coating which is protective in a case where the subject body is exposed to a high-temperature atmosphere including some substances like dust such as calcia, magnesia, alumina, and silica, which would melt at high temperature.

### BACKGROUND ART

Engineers in the field of gas turbines continue to make efforts in raising the operating temperatures in order to improve energy efficiency. Its turbine blades and nozzles have been of nickel superalloys in the past and engine operation up to 1100 degrees C level has been thereby realized. Ceramic-matrix composites (CMCs) are recently used in place of the nickel superalloys and further environmental barrier coatings (EBCs) such as stabilized zirconia are used in order to prevent steam oxidation, thereby enabling operation at 1200 degrees C level.

At higher temperatures, 1300 degrees C level for example, new issues would be allegedly come to the surface. More specifically, the air taken into the gas turbines inevitably contains micro particles such as dust, which in turn contains components such as calcia, magnesia, alumina and silica (collectively, CMAS). It is expected that CMAS produce a liquid phase above 1240 degrees C, which would react with and thereby corrode the EBC (CMAS attack). Degradation of turbines by dust may become prominent particularly in airplanes flying over desert areas.

It is keenly studied to add any top coatings over the EBCs in order to protect the EBC against the CMAS attack. The patent literature 1 discloses a related art.

### Citation List

### Patent Literature

| | |
|---|---|
| PTL 1: | Japanese Patent Application Publication 2011-508092 |
| PTL 2: | Japanese Patent Application Publication 2012-512809 |

### SUMMARY OF THE INVENTION

Alumina partially replaced with rare-earth oxides such as yttria is reported to, on contact with molten CMAS, react therewith and raise the melting point of CMAS, thereby making it less likely to produce a liquid phase. This is thus promising as a candidate for the top coating that protects the EBC but is in turn open to question on the issue of the long-term protection ability because the reaction consumes this substance itself. The coating disclosed hereinafter has been studied in order to solve this problem.

According to the present disclosure, a coating for protecting a ceramic-matrix composite against a high-temperature environment including dust is provided with a top layer of a substance represented by a formula a(ReO_{1.5})b(AlO_{1.5})c(TrO₂) as an average composition at least on a face exposed to the environment, wherein Re is one or more selected from Yb and Lu, and Tr is Hf or Zr, wherein aluminum in the substance constitutes grains formed of a compound represented by Re₃Al₅O₁₂ and the grains with common crystal orientations aggregate together to respectively form multiple domains.

Preferably, a, b, and c in the substance are all greater than 0. Alternatively preferably, a, b and c in the substance satisfy a+b+c=1 and a>0.5, b>0.1, and c>0. Further alternatively preferably, a, b and c in the substance satisfy a+b+c=1 and 0.76≥a≥0.53, 0.42≥b≥0.16, 0.34≥c≥0.05. More preferably, Tr is Hf in the substance. Still preferably, an average cross-sectional area of the domains is 10 square micrometers or greater.

### EFFECTS OF THE INVENTION

The disclosed art provides a coating capable of protecting ceramic-matrix composites against a high-temperature environment including dust over a long term.

### BRIEF DESCRIPTION OF THE DRAWINGS

FIG. 1 is a schematic sectional view of a ceramic-matrix composite coated with a top coating and an environmental barrier coating in accordance with an embodiment.
FIG. 2 is a schematic sectional view illustrating a state where deposits including CMAS react with the coating to create a protective coating.
FIG. 3 is a drawing schematically illustrating a microstructure of a coating with a domain structure.
FIG. 4A is a microscope image of a coating with a uniform structure, which is color-coded by the EBSD method.
FIG. 4B is a microscope image of a coating with domains where grains with common crystal orientations aggregate together to form the domains.
FIG. 5 is a schematic drawing illustrating a device for forming a coating by an electron beam evaporation method.
FIG. 6 is a schematic plan view illustrating a way for applying a simulated deposit to a sintered body.
FIG. 7 is a graph showing a relationship between an average cross-sectional area of domains and a thickness of reacted layer for each sintered body.
FIG. 8 is a diagram in which possibility of domain formation by a sintering method is plotted on a pseudo-ternary phase diagram of the hafnia-ytterbia-alumina system.
FIG. 9A is a sectional SEM image of a coating with a uniform structure after a corrosion test.
FIG. 9B is a sectional SEM image of a coating including domains after a corrosion test.

### DESCRIPTION OF EMBODIMENTS

Certain embodiments will be described hereinafter with reference to the appended drawings.

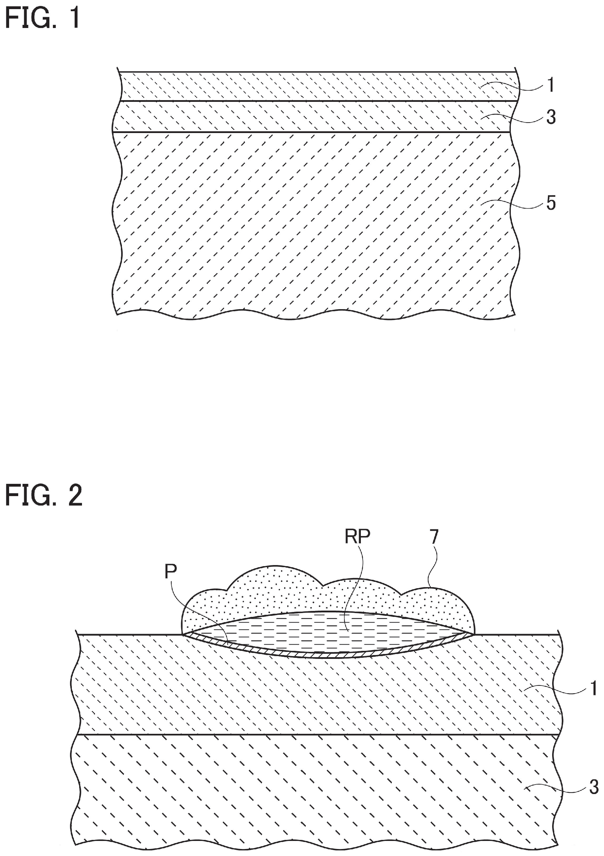

A coating of the present embodiment is preferably used for the purpose of protecting a subject body against an environment, where the subject body may be a stator vane or a rotor blade of a gas turbine used in a high-temperature environment for example. Referring to FIG. 1, a substrate 5 of the subject body is covered with an environmental barrier coating (EBC) 3 for example, and its surface is further covered with an anti-dust coating 1.

The substrate 5 is of a ceramic matrix composite (CMC) for example. The CMC is for example of reinforcement fibers of a ceramic such as silicon carbide and a matrix forming a composite with the reinforcement fibers to combine these fibers together. The reinforcement fibers may be of another ceramic instead of silicon carbide. The matrix is mainly of a ceramic that is common with the reinforcement fibers but may be of another ceramic instead. The present embodiment is, however, not limited to CMC but may be applicable to any publicly-known material or any still unknown material.

The environmental barrier coating 3 is of a material having an ability of shielding the substrate 5 from the environment. The material is beneficial in shielding the substrate 5 from a corrosive environment such as high-temperature steam to prevent its oxidization. The material is, still preferably, sufficiently close in thermal expansion coefficient to the substrate 5. This is to prevent exfoliation of the environmental barrier coating 3 from the substrate 5 by thermal expansion/contraction. The environmental barrier coating 3 may be, however, directed not to prevention of steam oxidation but to another purpose, and therefore the material may have another ability additionally or alternatively.

To the environmental barrier coating 3, rare-earth silicates such as ytterbium silicate, silicates such as mullite (aluminosilicate), or transition metal oxides such as zirconia or hafnia are preferably applicable. An example of zirconia can be so-called stabilized-zirconia to which an oxide of a rare earth element such as yttrium is added so as to stabilize its cubic crystal. In between the barrier-performable substance and the substrate 5, any intermediate layer such as silicon can be interposed to relieve difference in thermal expansion coefficient. Or, instead of or in addition to them, barium strontium aluminosilicate (BSAS) may be applied to the environmental barrier coating 3.

The anti-dust coating 1 is mainly used for the purpose of protecting the environmental barrier coating 3 and the substrate 5 against a high-temperature environment including dust. Of course, it is not intended to exclude any other purposes.

The anti-dust coating 1 is generally of a mixture of a rare-earth oxide, alumina and a transition metal oxide, which fuse together partly or totally to form sinter, multi compound or mixed oxide. This substance may be alternatively represented as a composition a(ReO_{1.5})b(AlO_{1.5})c(TrO₂), where Re is one or more selected from rare earth elements, and Tr is any transition element or in particular a group 4 transition element such as Hf or Zr.

Alumina in this substance is at least partly in the form of a compound represented by Re₃Al₅O₁₂ and grains dispersed in the substance. These grains are not necessarily dispersed uniformly and randomly, but may have a certain order preferably as described hereafter.

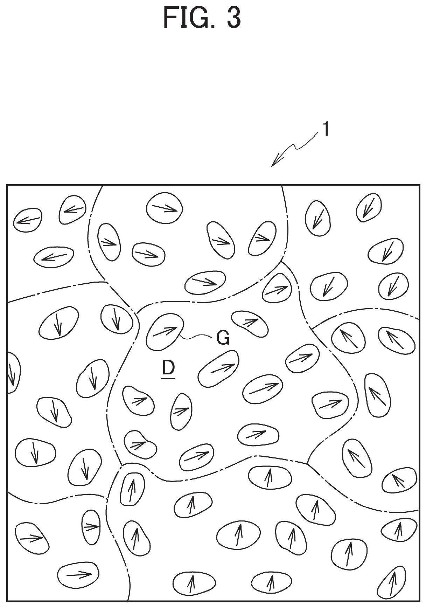

FIG. 3 schematically shows an aspect of grains G formed of Re₃Al₅O₁₂ dispersed in the anti-dust coating 1 along with crystal orientations thereof. The orientations are respectively indicated by arrows, where the directions of the arrows are limited in a two-dimensional plane due to project constraints but of course the directions are three dimensional. As schematically shown therein, when the crystal orientation of each grain G is viewed, the grains with common crystal orientations aggregate together to respectively form domains D. An average cross-sectional area of the domains D is for example 10 square micrometers or greater, and more preferably 20 square micrometers or greater. This structure the coating has will be referred to as a "domain structure" hereinafter. Within one domain D, the difference in crystal orientation is, for example, 5 degrees or less, but compared to other domains D, there is a significant difference exceeding 5 degrees, and therefore presence or absence of the domain structure can be readily identified by any proper means for observing the crystal orientations.

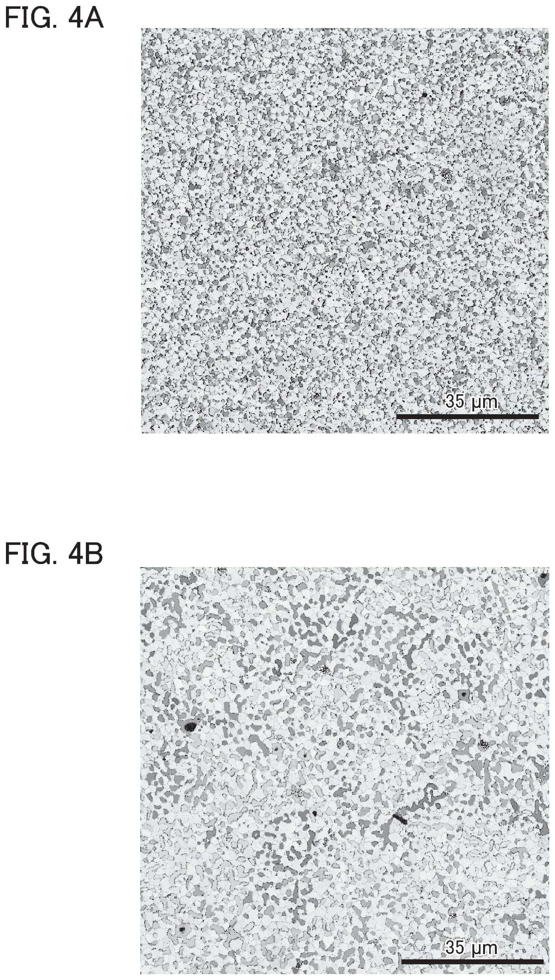

FIGs. 4A and 4B respectively show a coating without a domain structure and a coating with a domain structure. These drawings respectively indicate color-coded images shown in grayscale where crystal orientations of Re₃Al₅O₁₂ grains are identified respectively by an electron backscatter diffraction (EBSD) method and thereby color-coded. Grains with common crystal orientations in these drawings appear with the same degree of shading. Further, if full-colored images before grayscale conversion were referred, difference of the crystal orientations would be identified more clearly. It is clearly determined that the orientations are random in FIG. 4A and the grains with common crystal orientations aggregate together in FIG. 4B. Presence or absence of the domain structure can be therefore readily identified by the EBSD method.

Referring to FIG. 2, when hot air including impurities such as dust touches a coating, a part of the impurities adheres to the coating, which is to be a deposit 7. If the deposit 7 is heated up to over 1240 degrees C, calcia, magnesia, alumina, and silica (collectively referred to as CMAS) included therein begin to melt, and further partly react with the coating to create a product RP. The product RP may be still in a liquid phase, if its melting point is below the environmental temperature. Then the reaction with the coating continues and, if there are any small cracks in the coating, it penetrates deeper into the coating, eventually reaching and corroding the underlying environmental barrier coating. An anti-dust coating 1 formed of a substance represented by a formula a(ReO_{1.5})b(AlO_{1.5})c(TrO₂) as an average composition, where Re is one or more of rare earth elements, and Tr is any of transition elements, elevates the melting point of the product RP and thus reduces the liquid phase to produce a protective coating P that remains stable in a solid phase even at high temperatures. Due to this effect of the protective coating P, the anti-dust coating 1 provides excellent protection against CMAS in general.

According to general knowledge of a person skilled in the art, the person may expect that, the greater the uniformity, the greater the protective ability of the coating. Studies by the present inventors, however, showed that protective ability is further improved when the anti-dust coating 1 has the domain structure, contrary to this expectation. One possible model underlying this fact is that the crystal orientation of the coating is also reflected in the orientation of the reaction products, which ultimately affects protective ability. Alternatively, it may be thought that a coating retaining a domain structure has excess chemical energy, which affects reactions at the reaction interface. Although various other models are possible, the cause is not necessarily clear at this stage. Nevertheless, the difference in protective ability depending on whether or not the domain structure is present will be explained in detail below with reference to test results.

The composition of the anti-dust coating 1 influences the ease of forming a domain structure and thus governs the CMAS attack resistance, and the composition itself can also affect the CMAS attack resistance. In any case, as compared with a pseudo-binary system such as any of ReO_{1.5}-AlO_{1.5}, ReO_{1.5}-TrO₂, and AlO_{1.5}-TrO₂, the CMAS attack resistance becomes better when the anti-dust coating 1 is of a pseudo-ternary composition thereof. Thus, when the average composition is presented by a(ReO_{1.5})b(AlO_{1.5})c(TrO₂) where a+b+c=1, a>0, b>0, and c>0 are preferable. A larger amount of rare earth oxide is advantageous for forming a domain structure, for example, a>0.5, and a larger amount of alumina is advantageous for forming a domain structure, for example, b>0.1.

The anti-dust coating 1 may be produced by an electron beam physical vapor deposition method (EBPVD), a chemical vapor deposition (CVD) method, a thermal-spray method, a sol-gel method, a slurry dipping method, or such, or may be produced by two or more of these methods in combination.

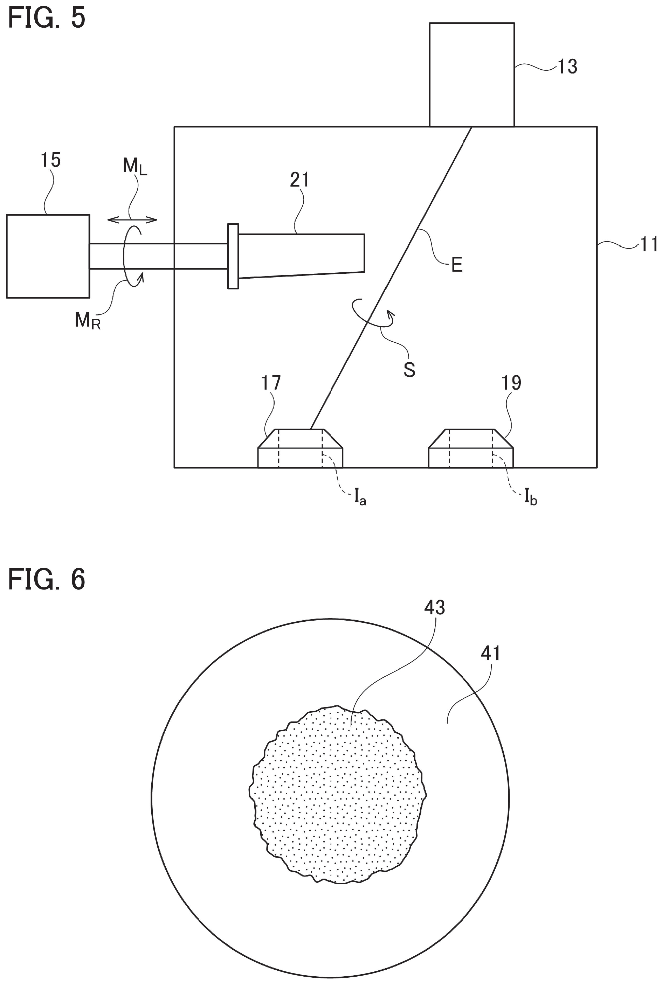

According to the EBPVD method, a device illustrated in FIG. 5 may be used for example. The chamber 11 is so structured as to keep its interior in a high-vacuum state. Further, an actuator 15 is coupled to the chamber 11 to support a subject body 21 within the chamber 11 and further make it controllably into a linear motion M_{L} and a rotational motion M_{R}. In the chamber 11 as well, an electron beam gun 13 and a first crucible 17 are installed and so structured that an electron beam E is drawn out and led to the first crucible 17 when potential difference is given therebetween. A first ingredient Iₐ in the crucible 17 is thereby irradiated with the electron beam E. The electron beam gun 13 is further so structured as to scan the electron beam E as shown by an arrow S, thereby heating and evaporating the first ingredient Iₐ in an unbiased fashion to adhere the vapor onto the subject body 21. The device may be further provided with a second crucible 19 holding a second ingredient I_{b}. By operating them alternately, a multi-layer coating consisting of mutually different substances may be continuously formed. Of course, the device may be provided with three or more crucibles to form a multi-layer coating consisting of three or more substances.

A mixture in which powders respectively of a rare-earth oxide, alumina and a transition element metal oxide are mixed together for example is applicable to the first ingredient Iₐ. This is loaded in the first crucible 17 and CMC is in advance formed into a shape of a rotor blade for example as the subject body 21, these bodies are introduced into the device and the EBPVD is executed, thereby producing the anti-dust coating 1 on the surface. Prior to the formation of the anti-dust coating 1, of course, by using the second crucible 19, the environmental barrier coating 3 may be in advance formed. More specifically, the environmental barrier coating 3 and the anti-dust coating 1 can be produced in series.

To test CMAS attack resistance of these compositions, tests were carried out, in which simulated coatings were prepared, and simulated CMAS was applied thereto and subject to heating. Details thereof will be described below.

Ingredients of the simulated coatings are powders of Yb₂O₃, Al₂O₃, and HfO₂. Each powder was weighed to obtain the compositions shown in Table 1. The Yb₂O₃ and HfO₂ powders were mixed in a ball mill at a speed of 50 to 200 rpm for 12 hours or more. The mixture was subject to a calcination process in which it was heated at 1400 degrees C for 10 hours, and thereafter the Al₂O₃ powder was added and mixed in the same way. The mixtures were press-molded at room temperature under a pressure of 150 to 200 MPa for 15 minutes to produce a disk-shaped molded body with a diameter of 20 mm and a thickness of 4 mm. These bodies were then sintered in air at 1700 degrees C for 4 hours and at 1400 degrees C for 50 hours, and thereafter these surfaces were polished with sandpaper to obtain disk-shaped sintered bodies 41 (production method C: test piece IDs 1, 3, 5, and 7).

Similarly, the powders of Yb₂O₃, Al₂O₃, and HfO₂ were weighed and, without the intervening calcination process, mixed in the ball mill at a speed of 50 to 200 rpm for 12 hours or more. By the same procedure as described above, disk-shaped sintered bodies 41 (production method S: test piece IDs 2, 4, 6, and 8) were obtained from these mixtures.

Each sintered body simulates the coating. Needless to say, test pieces 1 and 2, 3 and 4, 5 and 6, and 7 and 8 are combinations of samples sharing the same average composition but are produced by different methods.

**Table 1 CMAS-attack test results**

| (comparison with and without domain structure) | | | | | | |
|---|---|---|---|---|---|---|
| test piece ID | ratio (mol%) | | | production method | domain structure | reaction thickness (µm) |
| | YbO_{1.5} | AlO_{1.5} | HfO₂ | | | |
| 1 | 53.0 | 42.0 | 5.0 | C | △ | 115 |
| 2 | | | | S | ○ | 18 |
| 3 | 76.0 | 16.0 | 8.0 | C | △ | 52 |
| 4 | | | | s | ○ | 24 |
| 5 | 53.0 | 13.0 | 34.0 | C S | △ | 71 |
| 6 | | | | | ○ | 23 |
| 7 | 63.0 | 23.0 | 14.0 | C | △ | 48 |
| 8 | | | | S | ○ | 6 |

On the other hand, CaO, MgO, Fe₂O₃, Al₂O₃, and SiO₂ were mixed to a composition of CaO33MgO5FeO_{1.5}5AlO_{1.5}19SiO₂38 (at%) and kneaded to prepare a paste-like simulated CMAS 43. This simulates CMAS adhering to the coating.

The simulated CMAS 43 was applied respectively to a plurality of sintered bodies 41 as shown in FIG. 6 and they were subject to a heating test at 1400 degrees C for 7 hours ("CMAS resistance test" hereinafter). Test pieces after heating were naturally cooled, cut and embedded in resin, and respectively subject to sectional observation by EBSD and by scanning electron microscopy (SEM).

In the test pieces by the production method C, as exemplarily shown in FIG. 4A, grains are uniformly and randomly dispersed and thus any domain structure cannot be observed ("Δ" in Table 1). On the other hand, in the test pieces by the production method S, as exemplarily shown in FIG. 4B, in all compositions, grains with common crystal orientations aggregate together, and more specifically domain structures are observed ("o" in Table 1).

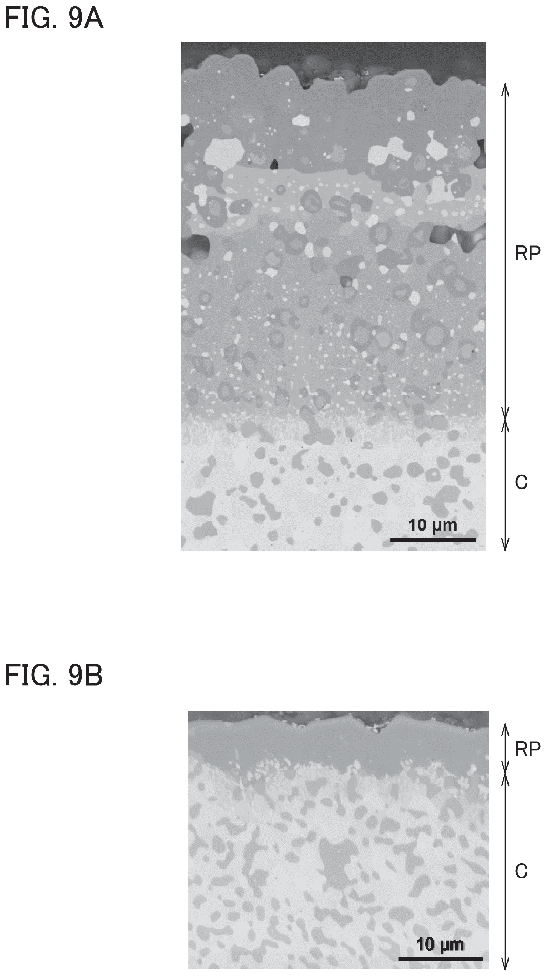

Examples of sectional SEM images are shown in FIG. 9A (test piece 7) and FIG. 9B (test piece 8). It can be determined that regions with lightly gray spotted patterns shown around the lower halves of the images are the sintered bodies, and slightly dark gray regions closely above the former regions are layers reacted with CMAS.

As it can be determined that the thinner the reaction layer, the higher the CMAS attack resistance, the thicknesses of the reaction layers were measured by identifying the reaction layers from the shadings of gray of the areas. Results are summarized in the rightmost column of Table 1. It can be concluded that, in any compositions, those with domain structures have thinner reaction layers and therefore have high resistance to CMAS attack.

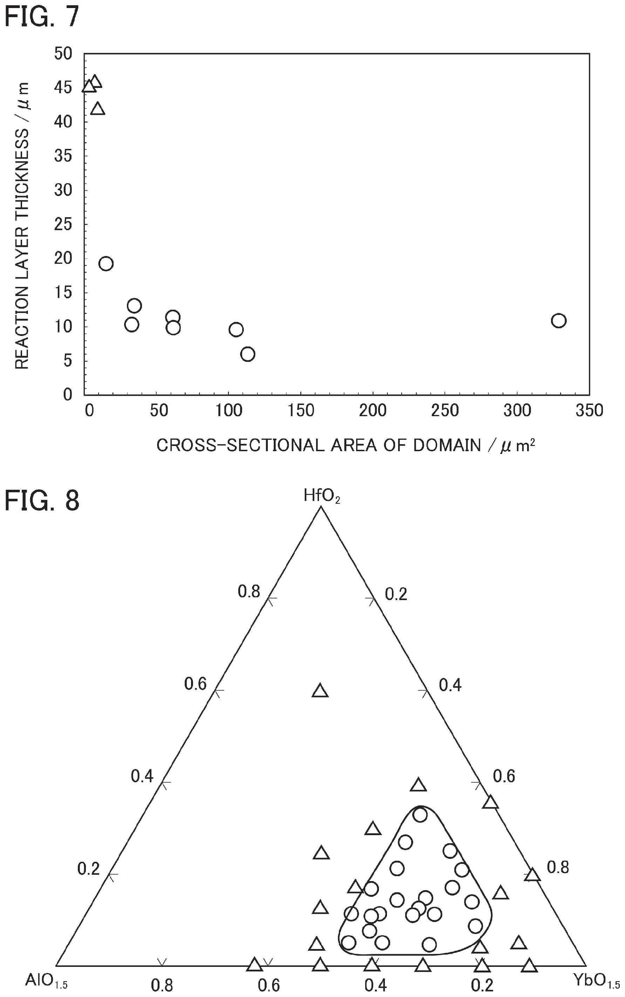

For each sample, the cross-sectional areas of the domains were measured at 10 locations and the average values were calculated. Fig. 7 is a graph on which the reaction layer thicknesses against the average cross-sectional areas of the domains are plotted. The marks "o" in the graph indicate those with domains and the marks "Δ" those without domains. It is apparent that the reaction layer thickness is thinner if the average cross-sectional area is 10 micrometers or more and it is further thinner if 20 micrometers or more.

Next, sintered bodies were prepared by the producing method S for the various compositions listed in Table 2, and similarly subject to the CMAS resistance test. Observation of the microstructures by the EBSD and the scanning electron microscope (SEM) were similarly carried out. The results are summarized in Table 2.

**Table 2 CMAS-attack test results**

| (comparison with and without domain structure) | | | | | |
|---|---|---|---|---|---|
| test piece ID | ratio (mol%) | | | domain structure | reaction thickness (µm) |
| | YbO_{1.5} | AlO_{1.5} | HfO₂ | | |
| | 53.0 | 13.0 | 34.0 | ○ | 23 |
| 9 10 | 44.0 | 44.0 | 12.0 | △ | 145 |
| 11 | 62.5 | 12.5 | 25.0 | ○ | 25 |
| 12 | 53.0 | 42.0 | 5.0 | ○ | 18 |
| 13 | 76.0 | 16.0 | 8.0 | ○ | 22 |
| 14 | 85.0 | 10.0 | 5.0 | △ | 106 |
| 15 | 50.0 | 39.0 | 11.0 | ○ | 14 |
| 16 | 57.0 | 29.0 | 14.0 | ○ | 16 |
| 17 | 56.0 | 33.0 | 11.0 | ○ | 19 |
| 18 | 67.0 | 12.0 | 21.0 | ○ | 29 |
| 19 | 63.0 | 23.0 | 14.0 | ○ | 9 |
| 20 | 67.0 | 22.0 | 11.0 | ○ | 23 |
| 21 | 20.0 | 20.0 | 60.0 | △ | 61 |
| 22 | 47.0 | 35.0 | 18.0 | △ | 112 |
| 23 | 51.0 | 33.0 | 16.0 | ○ | 9 |
| 24 | 58.0 | 13.0 | 29.0 | △ | 71 |
| 25 | 55.0 | 24.0 | 21.0 | ○ | 9 |
| 26 | 50.0 | 39.0 | 11.0 | ○ | 22 |
| 27 | 47.5 | 47.5 | 5.0 | △ | 121 |
| 28 | 54.0 | 38.0 | 8.0 | ○ | 9 |
| 29 | 66.0 | 0.0 | 33.0 | △ | 46 |
| 30 | 64.0 | 18.0 | 18.0 | ○ | 7 |
| 31 | 62.0 | 25.0 | 13.0 | ○ | 8 |
| 32 | 61.0 | 28.0 | 11.0 | ○ | 7 |
| 33 | 53.0 | 42.0 | 5.0 | ○ | 8 |
| 34 | 48.0 | 12.0 | 40.0 | △ | 112 |
| 35 | 46.0 | 24.0 | 30.0 | △ | 165 |
| 36 | 53.0 | 20.0 | 27.0 | ○ | 27 |
| 37 | 78.0 | 18.0 | 4.0 | △ | 63 |
| 38 | 67.0 | 22.0 | 11.0 | ○ | 14 |
| 39 | 69.0 | 26.0 | 5.0 | ○ | 24 |
| 40 | 72.0 | 14.0 | 14.0 | ○ | 23 |
| 41 | 76.0 | 8.0 | 16.0 | △ | 77 |
| 42 | 76.0 | 16.0 | 8.0 | ○ | 24 |
| 43 | 90.0 | 10.0 | 0.0 | △ | 61 |
| 44 | 70.0 | 30.0 | 0.0 | △ | 53 |
| 45 | 37.5 | 62.5 | 0.0 | △ | 386 |
| 46 | 80.0 | 20.0 | 0.0 | △ | 40 |
| 47 | 80.0 | 0.0 | 20.0 | △ | 51 |
| 48 | 50.0 | 50.0 | 0.0 | △ | 126 |

As with the way described already, FIG. 8 illustrates the results plotted on a pseudo-ternary diagram, in which the marks "o" indicate those with domains and the marks "Δ" those without domains. Whether or not a domain structure is formed seems to depend on the composition, even when using the same production method S. The range in which the domain structures are observed is shown by a closed curve in FIG. 8. When an average composition is represented by a formula a(ReO_{1.5})b(AlO_{1.5})c(TrO₂) where a+b+c=1, it seems to be advantageous for formation of the domain structure generally if a condition of a>0.5, b>0, and c>0 is satisfied, and more advantageous if 0.76≥a≥0.53, 0.42≥b≥0.16, and 0.34≥c≥0.05 in detail. Of course it depends on the production method of the coating and this finding may not be the case in the other production methods.

In regard to the test pieces 10, 14, 21, 22, 24, 27, 29, 34, 35, 37, 41, and 43 through 48 where the domain structures cannot be observed, all the reaction layer thicknesses exceed 40 micrometers. On the other hand, in regard to the other test pieces where the domain structures are observed, all the reaction layer thicknesses are less than 40 micrometers. More specifically, those with the domain structures can be determined to have high resistance to CMAS attack.

As described above, it is apparent that a coating having an average composition represented by a formula a(ReO_{1.5})b(AlO_{1.5})c(TrO₂), where grains formed of a compound represented by Re₃Al₅O₁₂ form a domain structure, can effectively protect a ceramic matrix composite against a high-temperature environment including dust.

Although certain embodiments have been described above, modifications and variations of the embodiments described above will occur to those skilled in the art, in light of the above teachings.

### INDUSTRIAL APPLICABILITY

The disclosed art provides a coating capable of protecting ceramic-matrix composites against a high-temperature environment including dust over a long term.

## Claims

1. A coating for protecting a ceramic-matrix composite against a high-temperature environment including dust, comprising:
a top layer of a substance represented by a formula a(ReO_{1.5})b(AlO_{1.5})c(TrO₂) as an average composition at least on a face exposed to the environment, wherein Re is one or more selected from Yb and Lu, and Tr is Hf or Zr,
wherein aluminum in the substance constitutes grains formed of a compound represented by Re₃Al₅O₁₂ and the grains with common crystal orientations aggregate together to respectively form multiple domains.

2. The coating of claim 1, wherein a, b, and c in the substance are all greater than 0.

3. The coating of claim 1, wherein a, b and c in the substance satisfy a+b+c=1 and a>0.5, b>0.1, and c>0.

4. The coating of claim 1, wherein a, b and c in the substance satisfy a+b+c=1 and 0.76≥a≥0.53, 0.42≥b≥0.16, 0.34≥c≥0.05.

5. The coating of any of claims 1 through 4, wherein Tr is Hf in the substance.

6. The coating of claim 1, wherein an average cross-sectional area of the domains is 10 square micrometers or greater.
